# EUROPÄISCHE PATENTANMELDUNG

(11) **EP 0 543 474 A1**
(43) Veröffentlichungstag der Anmeldung: **26.05.1993**
(21) Anmeldenummer: 92250337.0
(22) Anmeldetag: 13.11.1992
(51) Int. Cl.: B66C 1/62, B65G 47/90

(54) **Palettengreifvorrichtung**

(30) Priorität: 15.11.1991 DE 4138185
(71) Anmelder: RUD-KETTENFABRIK RIEGER & DIETZ GMBH U. CO., D-73432 Aalen (DE)
(72) Erfinder: Kohler, Paul, Dr., W-7920 Heidenheim (DE); Struppe, Gerhard, Dipl.-Ing., W-7082 Oberkochen (DE); Valentin, Erwin, Dipl.-Ing., W-7080 Aalen-Ebnat (DE)
(74) Vertreter: Böning, Manfred, Dr.-Ing.

(57) **Zusammenfassung**

Bei einer Palettengreifvorrichtung dienen zum Erfassen einer Palette (23) Greifer (2,3), die jeweils zwei Hebelarme (6 bzw. 7) aufweisen, von denen einer (7) zum Erfassen der Palette (23) und einer (6) zur Arretierung der Greifer (2,3) in der Greifstellung dient, wobei mit dem jeweils zur Arretierung der Greifer (2,3) verwendeten Hebelarm (6) jeweils eine schwenkbare Arretierungswippe (12 bzw. 13) zusammenwirkt, die durch die Greifer (2,3) selbst in ihre Arretierungsposition überführbar ist.

## Beschreibung

Die Erfindung betrifft eine Palettengreifvorrichtung nach dem Oberbegriff des Patentanspruches 1.

Aus dem DE-GM 1 948 468 ist eine mechanisch arbeitende Greifvorrichtung der in Betracht gezogenen Art bekannt, bei der einer der Hebelarme des Greifers als Winkel ausgebildet ist, dessen freies Ende über einen Lenker mit einer Kranöse in Verbindung steht, die eine Hakenzinke aufweist. Beim Anheben der Kranöse tritt die Hakenzinke mit einem Querholm eines Stülpkorbes in Eingriff und gleichzeitig wird ein am anderen Hebelarm des Greifers angeordneter Vorsprung in eine Position überführt, in der er unter die Unterseite der Palette faßt. Die bekannte Vorrichtung mag in Fällen, in denen es um den Transport von Steinstapeln, d.h. in denen ein Stülpkorb benötigt wird, den zu dessen Herstellung und zur Herstellung der speziellen Kranöse erforderlichen Aufwand rechtfertigen, schon beim Transport von auf Paletten gelagerten eingesiegelten Steinstapeln sind Stülpkörbe indes nicht vonnöten. Dies gilt erst recht für zahlreiche andere Anwendungsfälle.

Der Erfindung liegt die Aufgabe zugrunde, eine Palettengreifvorrichtung zu schaffen, deren Greifsystem ebenfalls weitgehend mechanisch arbeitet, bei der aber sowohl auf spezielle Hakenösen als auch auf einen Stülpkorb verzichtet werden kann. Gelöst wird diese Aufgabe durch die Merkmale des kennzeichnenden Teiles des Patentanspruches 1, wobei die Unteransprüche weitere der zweckmäßigen Ausgestaltung der Vorrichtung dienende Merkmale enthalten.

Bei der erfindungsgemäßen Palettengreifvorrichtung werden die Greifer durch Anschlagen an die Palette, d.h. selbsttätig aus ihrer Greifposition in eine Halteposition überführt und dort mechanisch verriegelt. Auf diese Weise wird nicht nur der Bauaufwand reduziert, sondern es lassen sich unter Einsatz von geeigneten Kettengehängen auf einfache Weise Paletten transportieren, ohne daß der Höhe des zu transportierenden Gutes durch einen Stülpkorb Grenzen gesetzt sind.

Die Erfindung wird im folgenden anhand der beigefügten Zeichnung näher erläutert. Es zeigen:
Fig. 1 teilweise im Schnitt eine Seitenansicht einer Palettengreifvorrichtung,
Fig. 2 eine Draufsicht auf die Palettengreifvorrichtung gemäß Fig. 1 und
Fig. 3 eine Einzelheit der Greifvorrichtung gemäß Fig. 1 und 2.

In den Figuren ist 1 der U-förmige Rahmen einer Palettengreifvorrichtung mit vier sich paarweise gegenüberliegenden Greifern 2,3 bzw. 4,5. Jeder der Greifer 2 bis 5 ist als zweiarmiger Hebel mit einem kurzen Hebelarm 6 und einem langen Hebelarm 7 ausgebildet und gegen die Wirkung einer Feder 8 jeweils schwenkbar auf einer Achse 9 an den parallelen Holmen des Rahmens 1 gelagert. Die freien Enden der längeren Hebelarme 7 sind gabelförmig, die freien Enden der kurzen Hebelarme 6 hakenförmig ausgebildet. Die jeweils auf einer Seite des Rahmens gelegenen Greifer 2 und 4 bzw. 3 und 5 stehen über Verbindungsstangen 10 und 11 miteinander in Verbindung und führen folglich synchrone Bewegungen aus.

Um begrenzte Beträge schwenkbar an den parallelen Holmen des Rahmens 1 sind außerdem vier eine Art Steuerbleche bildende plattenförmige Arretierungswippen 12,13 bzw. 14,15 auf jeweils einer Achse 16 gelagert. Die den Greifern 2 und 3 abgewandten Enden der Arretierungswippen 12 und 13 stehen über eine Gelenkstange 17 miteinander in Verbindung, deren eines Ende von der Gabel 18 des Tauchkolbens 19 eines Elektromagneten 20 gehalten wird. Der Tauchkolben 19 des Elektromagneten 20 kann um einen vergleichsweise geringen Betrag gegen die Wirkung einer Rückstellfeder 21 in das Gehäuse des Elektromagneten eintauchen.

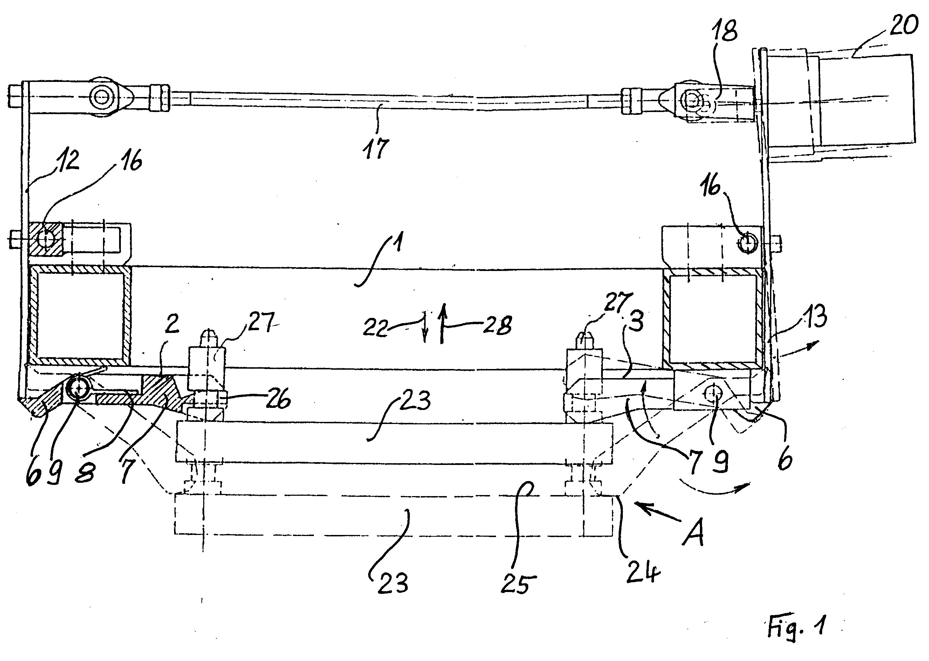

Beim Einsatz der beschriebenen Palettengreifvorrichtung wird diese durch ein geeignetes, regelmäßig fahrbares Handhabungsgerät von oben in Richtung des Pfeiles 22 auf die oberste Palette 23 eines Palettenstapels abgesenkt. Dabei kommt es zu einer Berührung zwischen dem freien Ende 24 des jeweils langen Hebelarmes 7 der Greifer 2,3,4,5 und der Palette 23. Diese Berührung kann, wie in Figur 1 bei A angedeutet, zwischen dem Ende 24 und der Oberseite 25 der Palette 23 erfolgen, ebenso möglich wäre aber auch bei entsprechender Ausgestaltung des Hebelendes die Einleitung einer Schwenkbewegung in die Greifer durch die Lagefixierungsstifte 27. Beim weiteren Absenken des Rahmens 1 werden die in Figur 1 jeweils linken Greifer 2 und 4 entgegen dem Uhrzeigersinn und die jeweils rechten Greifer 3 und 5 im Uhrzeigersinn geschwenkt. Während des Schwenkens drücken die hakenförmigen Enden der kurzen Hebelarme 6 der Greifer 2,3,4 und 5 die unteren Enden der Arretierungswippen 12,13,14 und 15 nach außen, d.h. sie leiten eine Schwenkbewegung in die Arretierungswippen 12,13,14 und 15 ein, die zu einer Verminderung des Abstandes zwischen deren oberen Enden führt. Die Gelenkstange 17 wird dabei mit Druck beaufschlagt und die Feder 21 zusammengedrückt. Gleichzeitig greifen die gabelförmigen Enden der langen Hebelarme 7 der Greifer 2,3,4 und 5 in Nuten von Lagefixierungsstiften 27, die an den vier Ecken der jeweiligen Palette 23 angeordnet sind. Nach einer bestimmten Absenkbewegung des Rahmens 1 überfahren die hakenförmigen Enden der kurzen Hebelarme 6 der Greifer 2,3,4 und 5 die Unterkanten der Arretierungswippen 12,13,14 und 15 und diese springen in ihre Ausgangslage zurück, wobei sie die Greifer 2,3,4 und 5 gleichzeitig in ihrer Halteposition verriegeln bzw. arretieren. Die Palette 23 kann nun in Richtung des Pfeiles 28 angehoben und an ihren Bestimmungsort transportiert werden.

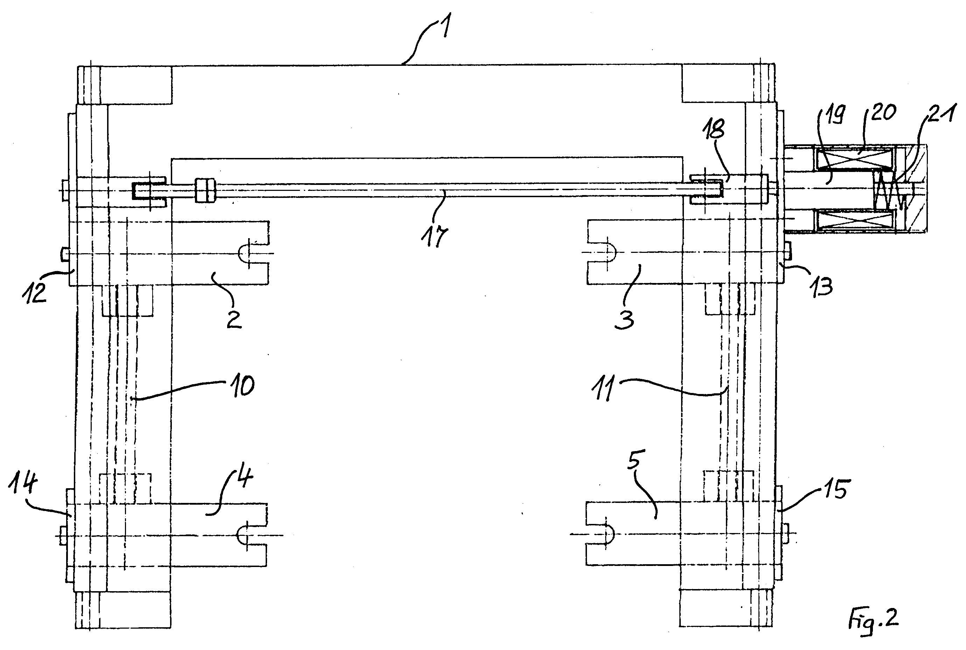

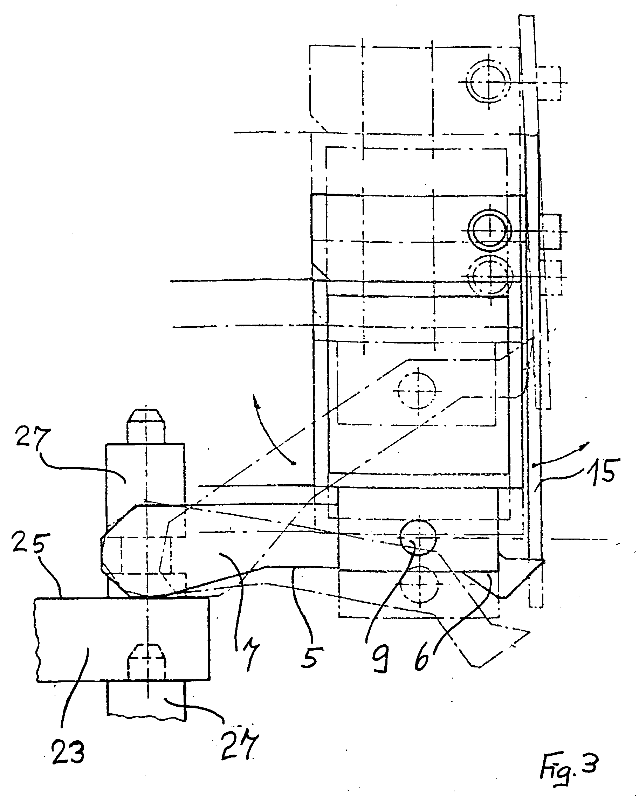

Zur Wiederfreigabe der Palette 23 wird die Greifvorrichtung erneut in Richtung des Pfeiles 22 abgesenkt. Die Absenkbewegung wird so lange fortgesetzt, bis die hakenförmigen Enden der kurzen Hebelarme 6 der Greifer 2,3,4 und 5 ihre unterste Position erreicht haben, wie dies am Beispiel des Greifers 5 in Figur 3 dargestellt ist. Es wird mit anderen Worten die in Vollinien gezeichnete Halteposition "überfahren", um den Druck, den die Palette durch ihr Eigengewicht zwischen den Greifarmen 2,3,4 und 5 und den Unterkanten der Arretierungswippen 12,13,14 und 15 aufgebaut hat, aufzuheben, indem die Abstellfläche bzw. ein anderer Palettenstapel zur Aufnahme des Eigengewichtes der Palette herangezogen wird. Sobald der vorgenannte Zustand erreicht ist, wird der Elektromagnet 20 durch einen Pulsor erregt und sein Tauchkolben 19 unter Überwindung der Kraft der Rückstellfeder 21 in Figur 2 nach rechts gezogen. Da das Gehäuse des Elektromagneten 20 fest mit dem oberen Ende der Arretierungswippe 13 verbunden ist, wird deren Abstand gegenüber der Arretierungswippe 12 verringert. Die Abstandsreduzierung führt dazu, daß die unteren Enden der sich jeweils gegenüberliegenden Arretierungswippen 12, 13 bzw. 14,15 auseinandergespreizt werden. Die Greifer 2,3,4 und 5 können sich folglich unter der Einwirkung der Federn 8 in ihre Ausgangslage, d.h. in die Greifposition zurückbewegen, und die Palette 23 wird freigegeben. Anschließend wird die durch den Pulsor gesteuerte Erregung des Elektromagneten 20 wieder aufgehoben und die Vorrichtung steht zur Aufnahme einer neuen Palette zur Verfügung.

## Patentansprüche

1. Palettengreifvorrichtung mit mehreren Greifern (2,3,4,5) zum form- oder reibschlüssigen Erfassen und Wiederfreigeben einer Palette (23), bei der die Greifer (2,3,4,5) als schwenkbar an einem Rahmen gelagerte zweiarmige Hebel ausgebildet sind, von denen jeweils ein Hebelarm (7) zum Erfassen der Palette (23) und jeweils ein Hebelarm (6) zum Arretieren der Greifer (2,3,4,5) in einer Halteposition dient, **dadurch gekennzeichnet**, daß die Greifer (2,3,4,5) durch die zu erfassende Palette (23) in die Halteposition überführbar sind, daß dem jeweils zur Arretierung der Greifer (2,3,4,5) in der Halteposition dienenden Hebelarm (6) jeweils eine durch ihn schwenkbare Arretierungswippe (12,13,14,15) zugeordnet ist, daß mindestens zwei sich gegenüberliegende Arretierungswippen (12,13) an den Enden, die den mit den Greifern (2,3) zusammenwirkenden Enden gegenüberliegen, durch eine Gelenkstange (17) miteinander verbunden sind und daß der Abstand zwischen den durch die Gelenkstange (17) miteinander verbundenen Enden der Arretierungswippen (12,13) beim Erfassen der Palette (23) durch die Greifer (2,3,4,5) und beim Freigeben der Palette (23) durch eine kraftgesteuerte Relativbewegung der Gelenkstange (17) gegenüber mindestens einem der Enden der durch sie miteinander verbundenen Wippen (12,13) veränderbar ist.

2. Vorrichtung nach Anspruch 1, **dadurch gekennzeichnet**, daß die Enden der zum Erfassen der Palette (23) diendenden Hebelarme (7) der Greifer (2,3,4,5) gabelförmig ausgebildet sind.

3. Vorrichtung nach Anspruch 1 oder 2, **dadurch gekennzeichnet**, daß die Greifer (2,3,4,5) durch jeweils eine Feder (8) in eine Greifposition gedrückt werden.

4. Vorrichtung nach einem der Ansprüche 1 bis 3, **dadurch gekennzeichnet**, daß am Rahmen (1) vier sich paarweise gegenüberliegende Greifer (2,3,4,5) gelagert sind.

5. Vorrichtung nach Anspruch 4, **dadurch gekennzeichnet**, daß jeweils zwei im Abstand voneinander, nebeneinander angeordnete Greifer (2,4 bzw. 3,5) durch jeweils eine Verbindungsstange (10) miteinander verbunden sind.

6. Vorrichtung nach einem der Ansprüche 1 bis 5, **dadurch gekennzeichnet**, daß die Schwenkbewegung der Arretierungswippen (12,13,14,15) durch Anschläge begrenzt ist.

7. Vorrichtung nach einem der Ansprüche 1 bis 6, **dadurch gekennzeichnet**, daß die Hebelarme (6,7) der Greifer (2,3,4,5) ungleich lang sind.

8. Vorrichtung nach Anspruch 7, **dadurch gekennzeichnet**, daß die mit den Arretierungswippen (12,13,14,15) zusammenwirkenden Hebelarme (6) kürzer sind als die zum Erfassen der Paletten dienenden Hebelarme (7).

9. Vorrichtung nach einem der Ansprüche 1 bis 8, **dadurch gekennzeichnet**, daß die Enden der mit den Arretierungswippen (12,13,14,15) zusammenwirkenden Hebelarme (6) hakenförmig ausgebildet sind.

10. Vorrichtung nach einem der Ansprüche 1 bis 9, **dadurch gekennzeichnet**, daß zum Einleiten einer Relativbewegung der Gelenkstange (17) gegenüber dem Ende einer Arretierungswippe (13) ein Elektromagnet (20) dient.

11. Vorrichtung nach einem der Ansprüche 1 bis 10, **dadurch gekennzeichnet**, daß die Arretierungswippen (12,13,14,15) plattenförmig ausgebildet sind.
